# DEMANDE DE BREVET EUROPEEN

(11) **EP 0 569 653 A1**
(43) Date de publication de la demande: **18.11.1993**
(21) Numéro de dépôt: 92440059.1
(22) Date de dépôt: 14.05.1992
(51) Int. Cl.: G06F 3/06, G06F 12/06

(54) **Dispositif de mémorisation d'informations connectable à un ordinateur**

(71) Demandeur: MEMORY DATA SYSTEMS, F-76000 Rouen (FR)
(72) Inventeur: Guerin, James, F-75011 Paris (FR)

(57) **Abrégé**

Dispositif de mémorisation d'informations connectable à un ordinateur comportant au moins un connecteur (6, 7) adapté à le relier à un ordinateur (1) et des mémoires (9, 14).

Il comporte un contrôleur d'accès (10), un pilote (11) émulant la configuration d'un disque dur et un pilote (12) émulant une extension de mémoire, lesdits pilotes (11, 12) étant reliés parallèlement aux mémoires (9, 14) de telle manière que l'ordinateur (1) utilise les informations mémorisées dans ces mémoires (9, 14) en utilisant l'un des pilotes (11, 12), les connecteurs (6, 7), les mémoires internes (9), le contrôleur (10) et les pilotes (11, 12) étant reliés sur une carte contrôleur (8).

## Description

La présente invention concerne un dispositif de mémorisation à cartouches amovibles connectable à un ordinateur.

Les systèmes de mémorisation connus à ce jour, de type carte électronique d'extension de mémoire enfichable sur la carte mère des microordinateurs, possèdent une faible capacité mémoire, sont figés dans une configuration et ne possèdent pas de possibilité d'évolution. De plus, leur gestion par le système d'exploitation ne peut se faire que par des adresses complémentaires de mémoire centrale. Enfin, ils ne sont pas amovibles ni autonomes en cas de coupure de courant.

Les systèmes de mémorisation de type disque dur, amovibles ou non, sont d'un accès long et en cas de coupure de courant n'effectuent pas de sauvegarde des traitements d'informations en cours.

La présente invention entend remédier à ces inconvénients en présentant un dispositif pouvant prendre la configuration informatique d'un disque dur ou d'une extension de mémoire centrale, possédant des cartouches amovibles contenant de la mémoire, chaque élément comportant un accumulateur permettant de sauvegarder à tout moment les informations en cours de traitement.

Enfin, la mémoire de ce dispositif est d'un accès très rapide pour l'ordinateur auquel il est connecté, le temps d'accès étant comparable à celui de la mémoire centrale dudit ordinateur.

Les principaux buts de l'invention sont d'améliorer les performances des ordinateurs classiques en ce qui concerne leurs échanges avec les mémoires de masse et de permettre des échanges rapides et fiables entre plusieurs ordinateurs sur des fichiers de grandes dimensions.

Par rapport à l'ordinateur et au système d'exploitation, le dispositif de mémorisation objet de la présente invention se présente comme de la mémoire étendue et/ou un ou plusieurs disques durs, à ceci près que la vitesse d'accès, la rétention, le transport et le support d'informations sont améliorés.

Une première réalisation du dispositif a permis d'atteindre trente-deux méga-octets en configuration d'extension de mémoire et six-cent-huit méga-octets en configuration de disques durs, selon la norme LIM-EMS 4.0. D'autre part, le dispositif de la présente invention peut recevoir des circuits intégrés comportant des mémoires de différentes capacités, notamment quatre, seize et soixante-quatre méga-bits existantes ou à venir.

A cet effet, la présente invention a pour objet un dispositif de mémorisation d'informations comportant un connecteur adapté à le relier à un ordinateur et des mémoires, ce dispositif se caractérisant en ce qu'il comporte un contrôleur de données, un pilote émulant la configuration d'un disque dur et un pilote émulant une extension de mémoire centrale paginée, lesdits pilotes étant reliés parallèlement aux mémoires de telle manière que l'ordinateur utilise les informations mémorisées soit par un protocole d'accès à un disque dur soit directement par des adresses complémentaires à sa propre mémoire.

Il est à noter que le terme "pilote" recouvre la signification du terme anglais "driver" communément utilisé.

D'autres caractéristiques de la présente invention concernent l'utilisation d'accumulateurs et l'utilisation de mémoires insérées dans des cartouches amovibles chaînables et électriquement autonomes.

Les avantages, buts et caractéristiques de la présente invention ressortiront plus clairement de la description qui va suivre, faite dans un but explicatif et nullement limitatif en regard du dessin annexé, dans lequel :
- la figure 1 représente un schéma du dispositif selon l'invention, associé à un ordinateur.
- la figure 2 représente un schéma des fonctions d'une carte contrôleur faisant partie du dispositif de la figure 1.
- la figure 3 représente un schéma d'un circuit électronique réalisant la carte contrôleur présentée en figure 2.
- la figure 4 représente un schéma de circuit électronique réalisant une cartouche faisant partie du dispositif présenté en figure 1.
- la figure 5 représente un schéma du mode de transfert des informations entre un ordinateur et le dispositif présenté en figure 1.
- la figure 6 représente une vue en coupe d'un boîtier de cartouche et de deux cartouches tels que présentés en figure 1.
- la figure 7 représente une vue en coupe d'un boîtier de cartouche vide.

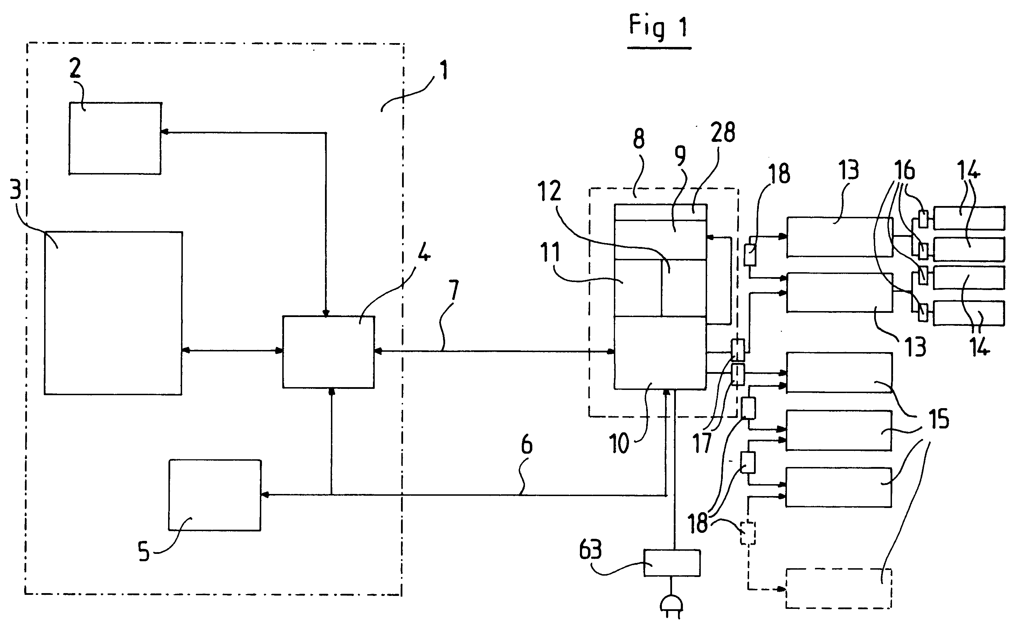

Dans la figure 1 sont représentés un ordinateur 1 comportant un périphérique 2, une mémoire centrale 3, un module d'accès direct à la mémoire 4 et un microprocesseur 5 et deux bus de transfert de données 6 et 7, une carte contrôleur 8 reliée aux bus 6 et 7, comportant une mémoire interne 9, une alimentation de sauvegarde 28, un contrôleur 10, un pilote d'émulation de disque dur 11, un pilote d'extension de mémoire 12, deux boîtiers internes 13 pour des cartouches de mémoire 14 et des boîtiers externes 15 pour des cartouches de mémoire 14, les boîtiers 13 et 15 étant reliés aux cartouches par des connecteurs 16 reliés à la carte contrôleur 8 par des connecteurs 17 et reliés entre eux par des connecteurs 18, une alimentation électrique 63 reliant la carte contrôleur 8 au secteur.

Le dispositif objet de la présente invention comporte la carte contrôleur 8, les boîtiers 13 et 15, les cartouches 14 et les connecteurs 16, 17 et 18 commandés par un logiciel de pilotage contenu dans la mémoire du contrôleur 10.

L'ordinateur 1 et les éléments qu'il incorpore sont de type connus, par exemple dans les ordinateurs dits compatibles IBM PC/XT/AT.

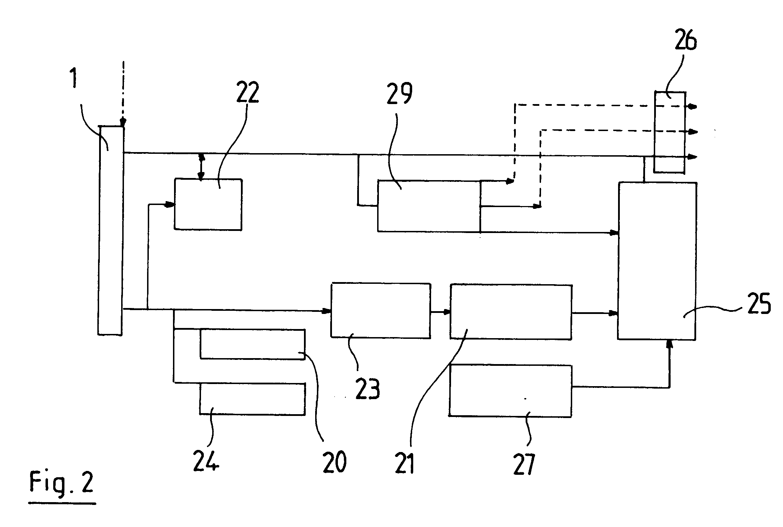

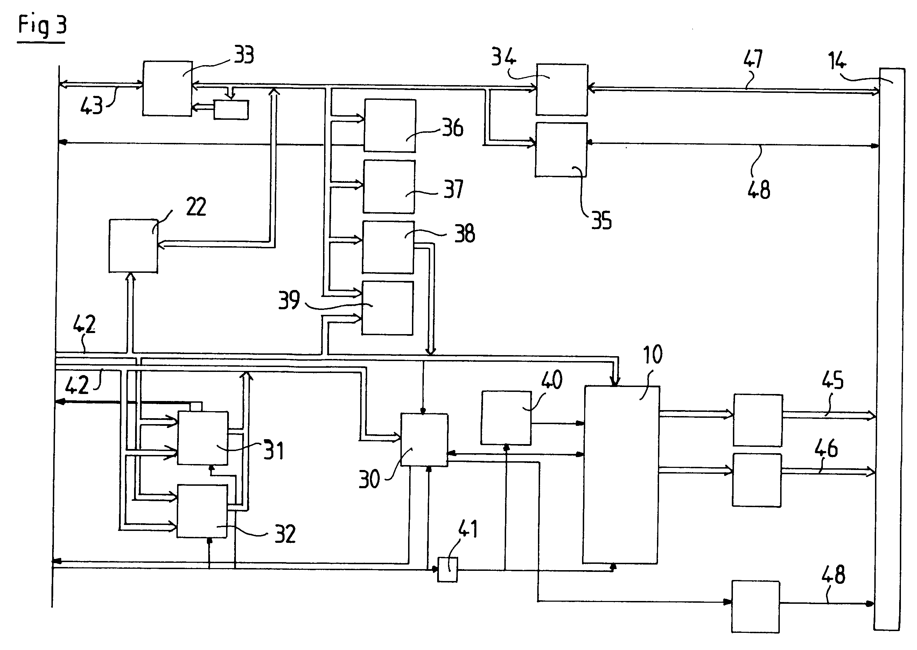

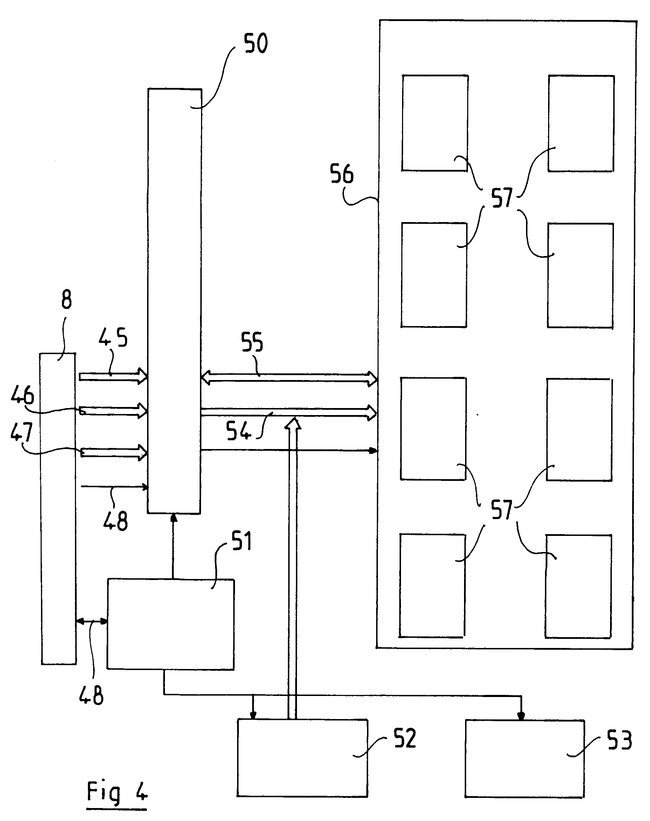

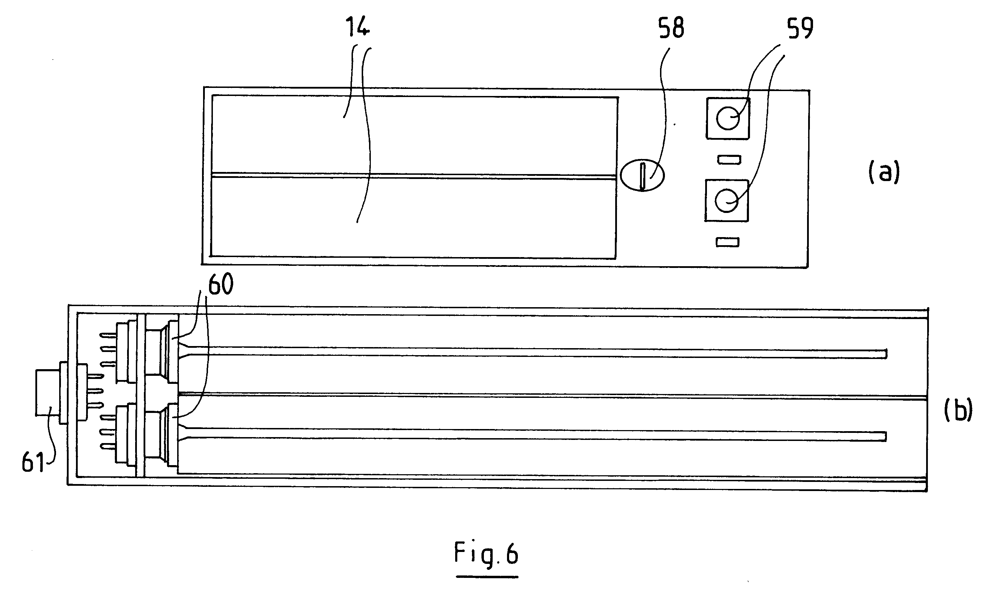

La carte contrôleur 8 est présentée en regard des figures 2 et 3. Les cartouches 14 destinées à s'intégrer dans les boîtiers 13 et 15 et les mémoires 9 sont présentées en regard de la figure 4. Les boîtiers 13 et 15 sont présentés en regard de la figure 6.

Les boîtiers 13 sont dits internes parce qu'ils peuvent s'insérer sur la face avant de l'ordinateur 1, à la différence des boîtiers 15, qui sont dits externes.

Les boîtiers 13 et 15 comportent des emplacements et des connecteurs 16 permettant à des cartouches de mémoire 14 de s'insérer mécaniquement et électriquement dans le dispositif par simple translation dans les boîtiers 13 et 15. Les positionnements des cartouches 14 déterminent leurs adresses particulières.

Pour ce faire, les connecteurs 16 peuvent être de type dit SUBD et les emplacements internes des boîtiers 13 et 15 peuvent avoir la forme d'un prisme droit.

Il est à noter que le contrôleur 10 gère l'accès à trois ensembles de mémoires, parallèlement : la mémoire 9 incorporée ou connectée à la carte contrôleur 8 et gérée comme une cartouche 14, les boîtiers internes 13 et les boîtiers externes 15. Les boîtiers internes 13 sont destinés à être chaînés, c'est-à-dire qu'un seul d'entre eux est connecté directement à la carte contrôleur 8 et qu'ils sont entre eux reliés deux à deux par les connecteurs 18. Il en est de même pour les boîtiers externes 15.

De plus, le contrôleur 10 est adapté à gérer tous les types de mémoires connues, mémoires vives dynamiques, communément appelées DRAM, mémoires vives statiques, communément appelées SPAM, mémoires mortes programmables et effaçables, communément appelées EPROM, mémoires mortes programmables et effaçables électriquement, communément appelées EEPROM, par exemple, simultanément, et ceci par programmation.

Ce dispositif peut identifier comme unité logique de disque une seule cartouche 14 ou un ensemble de plusieurs cartouches 14. De plus il peut faire coexister plusieurs unités logiques, extension de mémoire ou disque virtuel, composées chacune d'une ou plusieurs cartouches 14.

Enfin, il permet d'isoler sélectivement unne cartouche 14 et de la configurer soit en mémoire étendue, soit en disque virtuel.

Dans la figure 2 sont représentées les fonctions d'une carte contrôleur 8 telle que présentée dans la figure 1. Ces fonctions peuvent être programmées par une mémoire de type EPROM incorporée dans le contrôleur 10 et/ou par un logiciel implanté sur disquette, par exemple. Dans le cas représenté, le logiciel d'initialisation est incorporé dans une mémoire de type EPROM, c'est à dire une mémoire morte programmable et effaçable, incorporée dans le contrôleur 10.

On voit que la carte contrôleur 8 reliée à l'ordinateur 1 comporte un module de décodage des entrées-sorties 20, un module contrôleur de mémoire dynamique 21, une mémoire morte de type EPROM 22, un module de décodage de fenêtre d'accès 23, une interface d'extension de mémoire 24, un plan de mémoire 25, une interface de bus d'extension 26, un module de sauvegarde 27 et un module de sélection de cartouche 29.

Le module de décodage des entrées-sorties 20 permet de vérifier la bonne transmission des informations grâce notamment à un bit de parité. Le module contrôleur de mémoire dynamique 21 assure le rafraîchissement des informations contenues dans les mémoires 9 supportées par la carte contrôleur 8 et la configuration en disque dur ou en extension mémoire de la mémoire présente sur les cartouches 14.

La mémoire morte 22 permet l'initialisation du fonctionnement de la carte contrôleur 8 et le démarrage de l'ordinateur. Le module de décodage de fenêtre d'accès 23 permet de sélectionner la partie mémoire du dispositif qui est mise en relation avec le microprocesseur 5 afin d'être lue ou écrite. L'interface d'extension de mémoire 24 gère la mémoire 9 présente sur la carte contrôleur et la mémoire présente sur les cartouches 14, qui est configurée en extension de mémoire centrale de l'ordinateur 1.

Le plan de mémoire 25 correspond à la mémoire 9 présente sur la carte contrôleur 8. L'interface de bus d'extension 26 gère les bus reliant les boîtiers 13 et 15 à la carte contrôleur 8. Le module de sauvegarde 27 permet de sauvegarder les informations en cas de coupure de l'alimentation électrique de l'ordinateur 1.

Dans la figure 3 est représenté un schéma électronique de la carte contrôleur 8. On voit sur cette figure un contrôleur 10, une interface 30, un décodeur 31, un composant de transfert 32, un adaptateur de bus 33, un amplificateur de bus 34, un sélecteur de cartouche 35, un vérificateur de données 36, le module de configuration 37, un registre de page 38, un décodeur d'adresse mémoire 39, une mémoire morte 22, une horloge de fréquence de rafraîchissement de données 40 et un diviseur de fréquence 41. Ces composants sont reliés à l'ordinateur 1 par un bus d'adresse 42, un bus de données 43 et des connecteurs de dialogue 44 et aux cartouches 14 par deux bus d'adresse 45 et 46, un bus de données 47 et des connecteurs de dialogue 48.

Le contrôleur 10 gère des banques de mémoire vive réalisant la mémoire 9, assure le multiplexage des bus d'adresse 45 et 46, et si nécessaire le rafraîchissement des mémoires vives 9.

L'interface 30 contrôle les demandes de rafraîchissement des banques mémoires.

Le décodeur 31 est de type matrice de portes logiques programmables, communément et dans la suite appelée PAL, et assure le décodage des adresses générées pour les entrées-sorties. Il émet des signaux de sélection des différents organes programmables de la carte contrôleur.

Le composant de transfert 32 est de type PAL et est chargé de la gestion de certains signaux de contrôle.

L'adaptateur de bus 33 adapte le nombre de bits à la largeur du bus de données de l'ordinateur, réalisant ainsi automatiquement un mot entre 8, 16 et 32 bits ou plus.

L'amplificateur de bus 34 permet d'amplifier les signaux qui sont transmis à tous les boîtiers 13 et 15 sans risque de perte d'information.

La sélecteur de cartouche 35 sélectionne de façon sérielle la cartouche qui est connectée à l'ordinateur en scrutant la mémoire 9 utilisée comme cartouche, les boîtiers internes 13 et les boîtiers externes 15.

Le vérificateur de données 36 génère en écriture un bit de parité sur les données transmises et contrôle en lecture la parité des données entrantes.

Le module de configuration 37 assure le positionnement des cartouches placées dans les boîtiers externes 15 à la suite de celles placées dans les boîtiers internes 13 et les disques durs éventuellement connectés, par ailleurs, à l'ordinateur 1.

Le registre de page 38 permet la création de bits de poids forts des bus d'adresse 45 et 46 liés aux cartouches.

Le décodeur d'adresse mémoire 39 décode l'adresse du bus adresse 42 et contrôle en permanence si un accès en lecture ou en écriture a lieu à une adresse prédéterminée correspondant à l'adresse de la mémoire 9 ou des cartouches 14.

La mémoire morte 22 contient le programme d'initialisation de la carte contrôleur 8 permettant en outre la mise en route de l'ordinateur, aussi appelée bootage, à partir d'informations contenues dans la mémoire 9 ou dans une cartouche 14.

L'horloge de fréquence de rafraîchissement de données 40 génère la fréquence assurant les demandes de rafraîchissement des banques mémoires.

Le diviseur de fréquence 41 synchronise le fonctionnement de la carte contrôleur 8 avec celle de l'ordinateur 1.

Les bus d'adresse 45 et 46 sont reliés en parallèle au contrôleur 10 par l'intermédiaire des pilotes 11 et 12.

La compréhension de la figure est aisée au regard de ces explications. L'alimentation électrique n'est pas représentée mais comporte d'une part une connection avec l'alimentation électrique de l'ordinateur 1 et d'autre part un accumulateur intégré à la carte contrôleur 8.

La figure 4 représente un schéma électronique de réalisation d'une cartouche 14. On y voit un pilote 50, un module de sélection de cartouche 51, un module de rafraîchissement d'informations 52, un accumulateur 53, un bus adresse 54, un bus de données 55, une mémoire 56 composée de huit modules de mémoire 57.

La compréhension de cette figure est évidente. Chaque cartouche possède une adresse particulière qui est détectée par le module de sélection de cartouche 51.

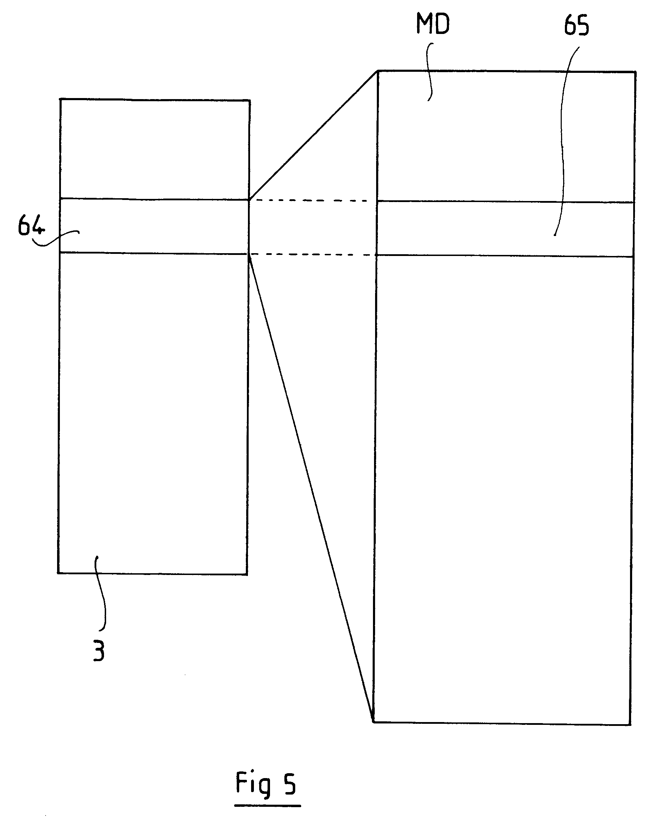

La figure 5 représente la mise en relation d'une partie d'une des mémoires du dispositif, MD, avec la mémoire centrale 3 de l'ordinateur 1. Dans chaque bloc est représenté schématiquement l'ensemble des adresses de mémoire utilisées, placées successivement de haut en bas. Un segment 64 de la mémoire centrale 3 est mis en relation avec un segment 65 de la mémoire du dispositif MD, soit sur une cartouche 14, soit dans la mémoire 9 présente sur la carte contrôleur 8, un segment de mémoire étant un sous-ensemble d'adresses de ladite mémoire et des informations mémorisées à ces adresses.

Les deux segments 64 et 65 qui représentent la même capacité de mémoire, sont mis en relation, c'est à dire que les informations contenues dans le segment de mémoire 65 du dispositif sont transférées dans le segment de mémoire 64 de la mémoire centrale 3 de l'ordinateur ou que les adresses des informations contenues dans le segment de mémoire centrale 64 sont utilisées pour accéder directement aux informations contenues dans le segment 65 de la mémoire du dispositif MD.

Ce mode de fonctionnement permet d'utiliser la mémoire de grande capacité du dispositif avec le nombre limité d'adresses autorisé par le système d'exploitation de l'ordinateur.

La sélection du segment 65 est réalisée par les circuits de la carte contrôleur 8 présentée en figure 2, le sélection du segment 64 étant effectuée par le logiciel d'exploitation du dispositif.

Dans l'état actuel des normes et des techniques, la longueur des segments 64 et 65 est limitée, et l'invention permet un accès à une forte capacité de mémoire avec un nombre limité d'adresses.

La figure 6 représente un boîtier interne 13 ou externe 15, vu de face (a) et vu de profil (b). On y voit deux cartouches 14, un interrupteur 58, deux diodes 59, deux connecteurs 60, un connnecteur 61 et un capot 62.

Les connecteurs 60 et 61 sont munis d'un détrompeur ou possèdent, par leur forme, un moyen d'éviter une mauvaise connection. Les connecteurs 60 relient le connecteur 61 aux cartouches 14 et le connecteur 61 relie les connecteurs 60 à un autre boîtier interne 13 ou externe 15 ou à la carte contrôleur 8, selon l'organisation présentée en figure 1.

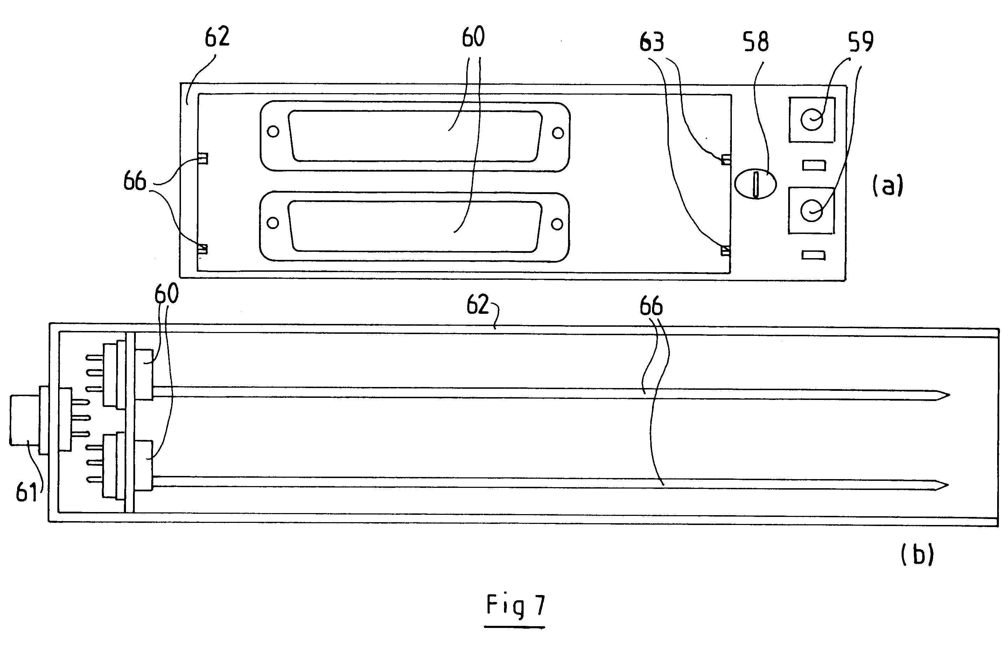

La figure 7 représente une vue d'un boîtier interne 13 ou externe 15 vide, vu de face (a) et vu de côté (b). On y voit un interrupteur 58, deux diodes 59, deux connecteurs 60, un connecteur 61, un capot 62 et quatre guidages 63.

Les connecteurs 60 et 61 sont munis d'un détrompeur ou possèdent, par leur forme, un moyen d'éviter une mauvaise connection. Les connecteurs 60 relient le connecteur 61 aux cartouches 14 et le connecteur 61 relie les connecteurs 60 à un autre boîtier interne 13 ou externe 15 ou à la carte contrôleur 8, selon l'organisation présentée en figure 1. Les guidages 63, en forme de rail, guident les cartouches en face des connecteurs 60, les cartouches 14 possédant à cet effet sur leurs flancs des rainures correspondant à ces guidages 63.

Il va de soi que la présente invention ne saurait être limitée à la description qui précède d'un de ses modes de réalisation, susceptible de subir un certain nombre de modifications sans pour autant sortir du cadre de l'invention.

## Revendications

1. Dispositif de mémorisation d'informations connectable à un ordinateur comportant au moins un connecteur (6, 7) adapté à le relier à un ordinateur (1) et des mémoires (9, 14), caractérisé en ce qu'il comporte un contrôleur d'accès (10), un pilote (11) émulant la configuration d'un disque dur et un pilote (12) émulant une extension de mémoire, lesdits pilotes (11, 12) étant reliés parallèlement aux mémoires (9, 14) de telle manière que l'ordinateur (1) utilise les informations mémorisées dans ces mémoires (9, 14) en utilisant l'un des pilotes (11, 12), les connecteurs (6, 7), les mémoires internes (9), le contrôleur (10) et les pilotes (11, 12) étant reliés sur une carte contrôleur (8).

2. Dispositif selon la revendication 1 caractérisé en ce qu'il comporte trois alimentations électriques, l'alimentation électrique de l'ordinateur (1), un accumulateur (28) adapté à maintenir les informations dans les mémoires (9, 14) en cas de séparation électrique de l'ordinateur ou en cas de défaillance de l'alimentation électrique de l'ordinateur (1), et une alimentation électrique (63) reliant la carte contrôleur (8) au secteur.

3. Dispositif selon la revendication 1 ou la revendication 2, caractérisé en ce que l'ordinateur (1) utilise les informations mémorisées dans les mémoires (9, 14), soit par un protocole d'accès à un disque dur émulé par le pilote (11), soit directement par un adressage à des adresses complémentaires de sa propre mémoire émulé par le pilote (12).

4. Dispositif selon l'une quelconque des revendications précédentes caractérisé en ce qu'une partie (14) des mémoires (9, 14) est répartie sur des cartouches (14) reliées entre elles et avec le contrôleur (10) et les pilotes (11, 12) par des connecteurs (17, 18).

5. Dispositif selon la revendication 4 caractérisé en ce que le contrôleur (10) n'est relié qu'à une ou deux cartouches (14) et en ce que les cartouches (14) sont reliées entre elles deux à deux, selon une chaîne.

6. Dispositif selon l'une quelconque des revendications 4 et 5, caractérisé en ce qu'il comporte un ou plusieurs boîtiers (13, 15) comportant chacun un connecteur (16) adapté à être connecté à un connecteur de cartouche (14) par simple translation de la cartouche (14) dans les boîtiers (13, 15).

7. Dispositif selon l'une quelconque des revendications précédentes caractérisé en ce que les positionnements des cartouches (14) déterminent leur adresse particulière.

8. Dispositif selon la revendication 7 caractérisé en ce que la sélection des différents positionnements des cartouches (14) est faite par un composant de type matrice de portes logiques programmables (31).

9. Dispositif selon l'une quelconque des revendications 4 à 8. caractérisé en ce que les cartouches (14) comportent un accumulateur (53) assurant la conservation des informations mémorisées quand les cartouches (14) ne sont plus reliées électriquement a la carte contrôleur (8).

10. Dispositif selon l'une quelconque des revendications précédentes caractérisé en ce que les pilotes (11, 12) et le contrôleur (10) mettent en relation directe l'unité centrale (5) de l'ordinateur (1) et une partie des mémoires (9, 14).

11. Dispositif selon l'une quelconque des revendications précédentes caractérisé en ce qu'il s'adapte automatiquement à la largeur du bus de l'ordinateur (1) au moyen d'un adaptateur de bus (33).

12. Dispositif selon l'une quelconque des revendications précédentes caractérisé en ce qu'il peut identifier comme unité logique de disque une seule cartouche (14) ou un ensemble de plusieurs cartouches (14).

13. Dispositif selon l'une quelconque des revendications précédentes caractérisé en ce qu'il permet d'isoler sélectivement une cartouche (14) et de la configurer soit en mémoire étendue, soit en disque virtuel.

14. Dispositif selon la revendication 13 caractérisé en ce qu'il permet de faire coexister plusieurs unités logiques composées chacune d'une ou plusieurs cartouches (14).
